# EUROPÄISCHE PATENTSCHRIFT

(11) **EP 2 671 001 B1**
(45) Veröffentlichungstag und Bekanntmachung des Hinweises auf die Patenterteilung: **23.10.2019**
(21) Anmeldenummer: 11796625.9
(22) Anmeldetag: 08.12.2011
(51) Int. Cl.: F16F 9/06

(54) **HYDROPNEUMATISCHE KOLBENZYLINDERANORDNUNG**
HYDROPNEUMATIC PISTON/CYLINDER ARRANGEMENT
ENSEMBLE PISTON-CYLINDRE HYDROPNEUMATIQUE

(30) Priorität: 01.02.2011 DE 102011010070
(43) Veröffentlichungstag der Anmeldung: 11.12.2013
(73) Patentinhaber: Hydac Technology GmbH, 66280 Sulzbach/Saar (DE)
(72) Erfinder: WEBER, Norbert, 66280 Sulzbach/Saar (DE)
(74) Vertreter: Bartels und Partner, Patentanwälte
(86) Internationale Anmeldenummer: PCT/EP2011/006169
(87) Internationale Veröffentlichungsnummer: WO 2012/103909

(56) Entgegenhaltungen:
- EP-A1- 0 884 499
- FR-A1- 2 331 718
- FR-A5- 2 103 914
- US-A- 3 817 566
- US-A- 4 711 435

## Beschreibung

Die Erfindung betrifft eine hydropneumatische Kolbenzylinderanordnung, insbesondere zur Verwendung als Feder- und/oder Stoßdämpferelement, mit den Merkmalen im Oberbegriff von Anspruch 1.

Derartige hydropneumatische Kolbenzylinderanordnungen sind bekannt, vgl. beispielsweise die japanische Patentveröffentlichung JP 2006-070950 A. Solche Kolbenzylinderanordnungen können für unterschiedliche Anwendungszwecke zum Einsatz kommen, beispielsweise bei Fahrzeugen, insbesondere Nutzfahrzeugen, zur Achsfederung oder in der allgemeinen Technik als Schwingungsdämpfer oder Schockabsorber oder dergleichen. Für viele Anwendungszwecke, insbesondere für den mobilen Einsatz, etwa als Federbein, ist eine kompakte Bauweise der Kolbenzylinderanordnung wesentlich, so dass sich bekannte Lösungen, wie in DE 35 12 232 A1 offenbart, nicht für sämtliche Anwendungszwecke eignen. Zwar beschreibt dieses Dokument eine hydropneumatische Achsfederung für Fahrzeuge, also für mobilen Einsatz, wobei es sich jedoch vorzugsweise um Auto- und Mobilkrane, also um Großfahrzeuge handelt, deren Fahrgestell durch Hydraulikzylinder auf deren am Rahmen angehängten Achsen abgestützt sind. Hierbei sind die Hydraulikzylinder mittels Hydraulikleitungen und über sperrbare Ventile mit hydraulischen Gas- oder Federspeichern verbunden, die außerhalb des jeweiligen Hydraulikzylinders extern angeordnet über Füll- und Ablassventile an Zu- und Abführleitungen für die Hydraulikflüssigkeit angeschlossen sind. Aufgrund der ausgegliederten Gas- oder Federspeicher nebst zugeordneter Ansteuerung ist zum einen der Bauraumbedarf entsprechend hoch, und zum anderen ist aufgrund der langen Ansteuerwege über die genannten Ventile nebst Zu- und Abfuhrleitungen das Ansprechverhalten der Federung mit Hysterese behaftet und findet zeitverzögert statt.

Zwar vermeidet die eingangs genannte bekannte Lösung gemäß der japanischen Veröffentlichung JP 2006-070950 A diese erwähnten Nachteile, indem der pneumatische Federspeicher in Form eines Blasenspeichers in den Zylinder integriert ist. Diese Lösung ist jedoch insofern nachteilig, als Betriebssicherheit im Langzeitbetrieb nicht gewährleistet ist, weil die Permeabilität des Werkstoffs der Membran des Blasenspeichers durch Diffusion zum Gasverlust des Blasenspeichers führt. Die in dem japanischen Dokument beschriebenen Maßnahmen zur Verhinderung der Gasdiffusion durch Beschichten der Membran mit einer amorphen Kohlenstoffschicht sind aufwendig und bieten keinen absoluten Schutz gegen Gasdiffusion durch die Membran.

Die EP 0 884 499 A1 offenbart eine hydropneumatische Kolbenzylinderanordnung, insbesondere zur Verwendung als Feder- und/oder Stoßdämpferelement, mit einem Zylinder und einem in dessen mit Hydraulikfluid gefüllten Zylinderraum axial bewegbar geführten, mit einem mit einer abgedichtet aus einem Ende des Zylinders nach außen geführten Kolbenstange verbundenen Kolben, dessen von der Kolbenstange abgewandter Kolbenboden in fluidführende Wirkverbindung mit einem pneumatischen Federspeicher bringbar ist, wobei als Federspeicher ein Kolbenspeicher vorgesehen ist, dessen Speicherkolben an das im Zylinderraum befindliche Hydraulikfluid unmittelbar angrenzt, wobei im Zylinderraum zwischen dem mit der Kolbenstange verbundenen Kolben und dem Speicherkolben ein Zwischenkörper axial feststehend angeordnet ist, in dem zumindest ein, einen vorgegebenen Durchstrom ermöglichender Fluiddurchlass vorgesehen ist, und wobei im Zwischenkörper ein Fluiddurchlass in Form eines Drossel-Rückschlagventils vorgesehen ist, wobei diese Ventilfunktion in zwei separate Ventile, ein Dämpferventil und ein Rückschlagventil aufgeteilt ist und diese Ventile elastisch verformbare Schließglieder aufweisen.

Die US 3 817 566 beschreibt eine hydropneumatische Kolbenzylinderanordnung, insbesondere zur Verwendung als Feder- und/oder Stoßdämpferelement, mit einem Zylinder und einem in dessen mit Hydraulikfluid gefüllten Zylinderraum axial bewegbar geführten, mit einem mit einer abgedichtet aus einem Ende des Zylinders nach außen geführten Kolbenstange verbundenen Kolben, dessen von der Kolbenstange abgewandter Kolbenboden in fluidführende Wirkverbindung mit einem pneumatischen Federspeicher bringbar ist, wobei als Federspeicher ein Kolbenspeicher vorgesehen ist, dessen Speicherkolben an das im Zylinderraum befindliche Hydraulikfluid unmittelbar angrenzt, wobei im Zylinderraum zwischen dem mit der Kolbenstange verbundenen Kolben und dem Speicherkolben ein Zwischenkörper axial feststehend angeordnet ist, in dem zumindest ein, einen vorgegebenen Durchstrom ermöglichender Fluiddurchlass vorgesehen ist.

Weitere hydropneumatische Kolbenzylinderanordnungen gehen aus der US 4 711 435 und der FR 2 103 914 hervor.

Ausgehend von dieser Problematik stellt sich die Erfindung die Aufgabe, eine hydropneumatische Kolbenzylinderanordnung zur Verfügung zu stellen, die sich trotz kompakter Bauweise durch hohe Betriebssicherheit im Langzeitbetrieb auszeichnet.

Erfindungsgemäß ist diese Aufgabe durch eine hydropneumatische Kolbenzylinderanordnung gelöst, die die Merkmale des Patentanspruches 1 in seiner Gesamtheit aufweist.

Eine wesentliche Besonderheit der Erfindung besteht demgemäß darin, dass das Drossel-Rückschlagventil mit einer Ventilplatte vorgesehen ist, in der eine Bohrung zur Bildung einer Drosselstelle vorhanden ist. Dies ist bei innerhalb des Zwischenkörpers in axialer Richtung begrenzt zur Verfügung stehendem Einbauraum von besonderem Vorteil.

Ferner ist als Federspeicher ein Kolbenspeicher vorgesehen, dessen Speicherkolben an das im Zylinderraum befindliche Hydraulikfluid unmittelbar angrenzt. Bei dem derart in den Zylinder integrierten Kolbenspeicher kommen nicht nur die externen, Bauraum beanspruchenden Komponenten in Wegfall, wie sie bei ausgegliedertem Federspeicher erforderlich sind, sondern der integrierte Kolbenspeicher bildet im Vergleich zu einem Blasenspeicher auch eine weit höhere Betriebssicherheit, nicht nur hinsichtlich der Vermeidung der Gasdiffusion durch einen Membranwerkstoff, sondern auch hinsichtlich der größeren mechanischen Robustheit gegenüber einer Speichermembran.

Es ist im Zylinderraum zwischen dem mit der Kolbenstange verbundenen Kolben und dem Speicherkolben ein Zwischenkörper axial feststehend angeordnet, in dem zumindest ein, einen vorgegebenen Durchstrom ermöglichender Fluiddurchlass vorgesehen ist. Durch entsprechende Auslegung des Fluiddurchlasses und die entsprechende Größe der Volumenströme, die bei den Bewegungen des mit der Kolbenstange verbundenen Kolbens durch den Fluiddurchlass im Zwischenkörper verdrängt werden, lassen sich die Dämpfungs- und Federungscharakteristik der Anordnung optimal an die Bedürfnisse anpassen.

Im Zwischenkörper ist ein Fluiddurchlass in Form eines Drossel-Rückschlagventils vorgesehen. Dadurch eröffnet sich die Möglichkeit, die bei den Kolbenbewegungen erzeugten Volumenströme in der einen und der anderen Hubrichtung unterschiedlich zu gestalten, so dass eine schnelle Dämpfung in einer Hubrichtung bei entsprechend gedrosselter Rückbewegung bewirkt wird. Auch werden Schwingungen im System dadurch abgebaut.

In besonders vorteilhafter Weise kann der Zylinderraum für das Hydraulikfluid und der durch den Speicherkolben begrenzte gasseitige Raum des Kolbenspeichers durch ein von Ende zu Ende absatzlos durchgehendes Zylinderrohr gebildet sein. Dadurch bildet die Gesamtanordnung ein kompaktes, einheitliches Bauteil, das sich besonders für einen Einbau in Einrichtungen mit beschränktem Raumangebot eignet, beispielsweise bei einem Federbein.

Der Fluiddurchlass im Zwischenkörper kann in Form einer Durchgangsbohrung vorgesehen sein, die für die vorgesehenen Volumenströme entsprechend dimensioniert ist.

Der Zwischenkörper kann in Form einer im Zylinder passend aufnehmbaren runden Platte vorgesehen sein, die beispielsweise mittels zumindest eines Sprengringes axial im Zylinder gesichert ist.

Für eine zusätzliche Drosselwirkung, und zwar unabhängig in Zug- und Druckrichtung des mit der Kolbenstange verbundenen Kolbens, ist in diesem ein Drossel-Rückschlagventil vorgesehen, das einen begrenzten Fluiddurchstrom von der Kolbenvorderseite zu der an die Kolbenstange angrenzenden Kolbenrückseite ermöglicht, also zu einem am Zylinderende befindlichen geschlossenen Raum hin, aus dem sich die Kolbenstange abgedichtet aus dem Zylinder erstreckt.

Nachstehend ist die Erfindung anhand der Zeichnung im Einzelnen erläutert. Es zeigen:
- Fig. 1: einen schematisch vereinfacht gezeichneten Längsschnitt eines Ausführungsbeispiels der erfindungsgemäßen Kolbenzylinderanordnung;
- Fig. 2: in einer der Fig. 1 entsprechenden Darstellung einen abgebrochenen Teillängsschnitt lediglich des fluidseitigen Endbereichs eines gegenüber Fig. 1 abgewandelten Ausführungsbeispiels;
- Fig. 3: einen gegenüber Fig. 1 und 2 vergrößerten Längsschnitt lediglich eines Zwischenkörpers für die Benutzung bei den Ausführungsbeispielen gemäß Fig. 1 oder Fig. 2; und
- Fig. 4: einen Querschnitt des Zwischenkörpers entsprechend der Schnittlinie IV-IV von Fig. 3.

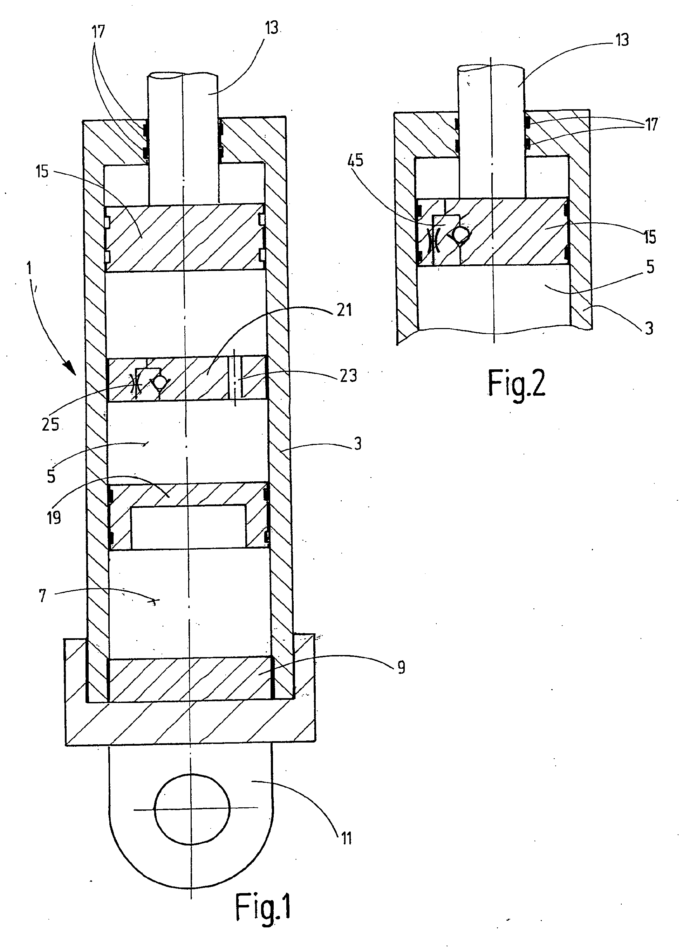

Bei den in der Zeichnung dargestellten Ausführungsbeispielen hat der Zylinder 1 die Form eines Zylinderrohres 3, das sich von dem die Fluidseite bildenden Zylinderraum 5 absatzlos durchgehend bis zum in das Zylinderrohr 3 integrierten Federspeicher 7 erstreckt. An dem dem Federspeicher 7 zugehörigen, in der Fig. 1 unten liegenden Ende ist das Zylinderrohr 3 durch eine Verschlussplatte 9 verschlossen, die eingeschraubt oder eingeschweißt ist. Ein in der Verschlussplatte 9 befindlicher, entsprechender Füllanschluss für die Befüllung des Federspeichers 7 mit Arbeitsgas (z.B. N₂) ist in der vereinfachten Darstellung von Fig. 1 nicht gezeigt. An dem die Verschlusskappe 9 aufweisenden Ende ist auf das Zylinderrohr 3 ein Befestigungsauge 11 aufgeschweißt oder aufgeschraubt. Durch das entgegengesetzte, geschlossene obere Ende des Zylinderrohres 3 ist die Kolbenstange 13 eines im fluidseitigen Zylinderraum 5 bewegbaren Kolbens 15 hindurchgeführt, fluiddicht abgedichtet mittels Dichtelementen 17. Der Federspeicher 7 ist als Kolbenspeicher ausgebildet, mit einem als bewegliches Trennelement zwischen Zylinderraum 5 und Speicher 7 vorgesehenen Speicherkolben 19 in Form eines flachen Topfes, der zum Speicher 7 hin geöffnet ist.

In einer axialen Position, die der zulässigen Hublänge des mit der Kolbenstange 19 verbundenen Kolbens 15 im Betrieb angepasst ist, befindet sich innerhalb des fluidseitigen Zylinderraumes 5 ein Zwischenkörper 21 in Form einer kreisrunden, ebenen Platte, die umfangsseitig passend an der Innenwand des Zylinderrohres 3 anliegt und daran axial festgelegt ist, beispielsweise mittels in der Zeichnung nicht dargestellter, in Nuten sitzender Sprengringe. Trotz der umfänglichen Anlage des Zwischenkörpers 21 am Zylinderrohr 3 bildet der Zwischenkörper 21 für das im Zylinderraum 5 befindliche Fluid (Hydraulikflüssigkeit) kein abdichtendes Trennelement, sondern ist mit einem einen Fluiddurchtritt ermöglichenden Einrichtungen versehen. Diese sind so ausgelegt, dass bei den Hubbewegungen des Arbeitskolbens 15 jeweils Volumenströme gewünschter Größe durch die Durchgangseinrichtungen hindurch verdrängt werden. Bei dem Beispiel von Fig. 1 ist zu diesem Zweck eine Durchgangsbohrung 23 mit einem an die Einsatzgegebenheiten angepassten Durchmesser vorgesehen. In Fig. 1 ist zusätzlich zur Durchgangsbohrung 23 ein Drossel-Rückschlagventil 25 im Zwischenkörper 21 angeordnet. Dieses ermöglicht in einer Strömungsrichtung einen stärker gedrosselten Volumenstrom als in der anderen Strömungsrichtung. Während in Fig. 1 beide Maßnahmen, nämlich Durchgangsbohrung 23 und Drossel-Rückschlagventil 25, im Zwischenkörper 21 vorgesehen sind, könnte auch die Bohrung 23 allein oder das Drossel-Rückschlagventil 25 allein den Fluiddurchlass bilden.

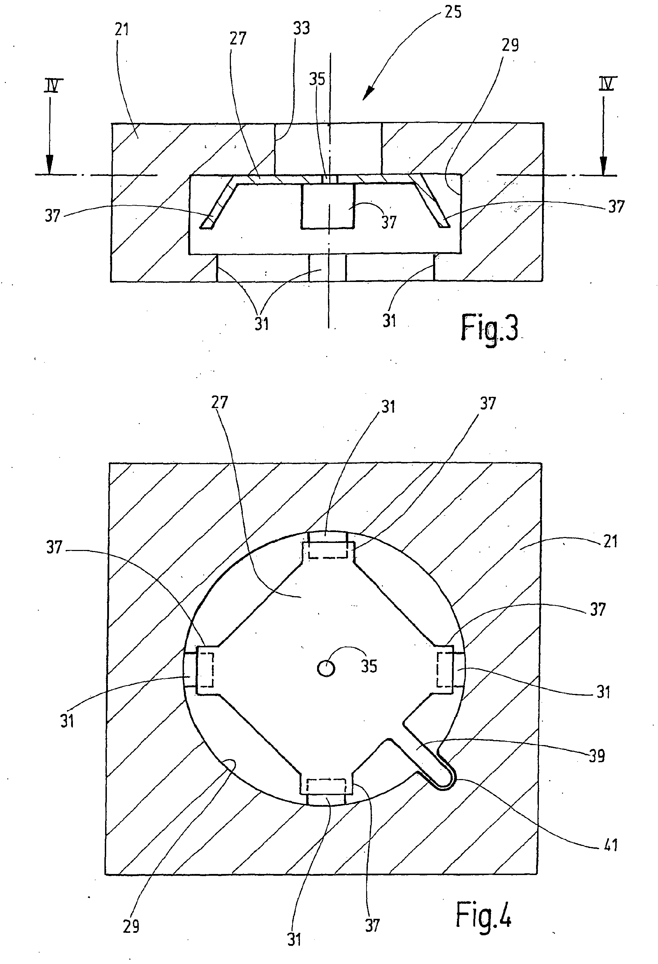

Die Fig. 3 und 4 verdeutlichen einen Aufbau des Drossel-Rückschlagventils 25 in Form einer Plattenventil. Bei dem in axialer Richtung innerhalb des Zwischenkörpers 21 zur Verfügung stehenden Raumes ist eine solche Ventilbauweise, wie sie prinzipiell aus DE 103 37 744 B3 an sich bekannt ist, besonders geeignet. Wie Fig. 3 und 4 zeigen, ist als beweglicher Ventilkörper eine Ventilplatte 27 vorgesehen, die sich innerhalb des Zwischenkörpers 21 in einem Ventilgehäuse 29 befindet. Dieses ist an dem in Fig. 3 unteren Ende offen, abgesehen von am Öffnungsrand radial nach innen vorstehenden Abstützkörpern 31. An der entgegengesetzten Oberseite des Zwischenkörpers 21 weist das Ventilgehäuse 29 eine Ventilöffnung 33 auf, die durch die Ventilplatte 27 verschließbar ist, die in Fig. 3 in ihrer Schließstellung dargestellt ist. In der Schließstellung ist der Fluiddurchgang durch die Ventilbohrung 33 gesperrt, abgesehen von einem gedrosselten Volumenstrom, der bei der Schließstellung durch eine im Zentralbereich der Ventilplatte 27 vorgesehene Drosselbohrung 35 hindurch möglich ist.

Die Ventilplatte 27 hat beim gezeigten Beispiel einen im Wesentlichen quadratischen Umriss, der eine kleinere Fläche beschreibt als es dem Querschnitt des Ventilgehäuses 29 entspricht, so dass, wenn sich die Ventilplatte 27 aus der Schließstellung bewegt (in Fig. 3 nach unten) und nicht mehr am Rand der Ventilöffnung 33 abdichtend anliegt, die Ventilplatte 27 an ihren Seiten umströmbar ist, so dass bei der Offenstellung ein verhältnismäßig großer Strömungsquerschnitt zur Verfügung steht. Beim Abheben der Ventilplatte 27 vom Rand der Ventilöffnung 33 stützt sich die Ventilplatte 27 mit den an den Eckbereichen schräg nach außen abgebogenen Fußteilen 37 an den Abstützkörpern 31 ab. Außer den Fußteilen 37, die nach dem Einsetzen der Ventilplatte 27 in das Ventilgehäuse 29 nach außen abgebogen sind, weist die Ventilplatte 27 eine für das Einsetzen in das Ventilgehäuse 29 biegbare Führungsnase 39 (in Fig. 3 der Einfachheit halber nicht dargestellt) auf, die mit einer Führungsnut 41 in Eingriff bringbar ist, die sich im Ventilgehäuse 29 in Axialrichtung erstreckt und zusammen mit der Nase 39 eine Verdrehsicherung für die Ventilplatte 27 bildet.

Beim gezeigten Beispiel ist die Ventilplatte 27 im Umriss im Großen Ganzen quadratisch. Es versteht sich, dass andere Formen möglich sein könnten, beispielsweise eine Dreieckform oder dgl., vorausgesetzt, dass der Umriss der Platte geringer ist als der Öffnungsquerschnitt des Ventilgehäuses 29, so dass in der geöffneten Stellung genügend Strömungsquerschnitt am Rand der Ventilplatte zur Verfügung steht.

Die Fig. 2 zeigt eine weitere Variante. Bei diesem Ausführungsbeispiel ist auch in dem mit der Kolbenstange 13 verbundenen Kolben 15 ein Drossel-Rückschlagventil 45 integriert, so dass ein zusätzliches Mittel zur Verfügung steht, das eine Anpassung der Dämpfungs- und/oder Federungscharakteristik an die Einsatzbedingungen ermöglicht.

## Patentansprüche

1. Hydropneumatische Kolbenzylinderanordnung, insbesondere zur Verwendung als Feder- und/oder Stoßdämpferelement, mit einem Zylinder (1) und einem in dessen mit Hydraulikfluid gefüllten Zylinderraum (5) axial bewegbar geführten, mit einem mit einer abgedichtet aus einem Ende des Zylinders (1) nach außen geführten Kolbenstange (13) verbundenen Kolben (15), dessen von der Kolbenstange (13) abgewandter Kolbenboden in fluidführende Wirkverbindung mit einem pneumatischen Federspeicher (7) bringbar ist, wobei als Federspeicher ein Kolbenspeicher (7) vorgesehen ist, dessen Speicherkolben (19) an das im Zylinderraum (5) befindliche Hydraulikfluid unmittelbar angrenzt, wobei im Zylinderraum (5) zwischen dem mit der Kolbenstange (13) verbundenen Kolben (15) und dem Speicherkolben (19) ein Zwischenkörper (21) axial feststehend angeordnet ist, in dem zumindest ein, einen vorgegebenen Durchstrom ermöglichender Fluiddurchlass (23, 25) vorgesehen ist, **dadurch gekennzeichnet, dass** im Zwischenkörper (21) ein Fluiddurchlass in Form eines Drossel-Rückschlagventils (25) vorgesehen ist und, dass das Drossel-Rückschlagventil (25) mit einer Ventilplatte (27) versehen ist, in der eine Bohrung (35) zur Bildung einer Drosselstelle vorhanden ist.

2. Kolbenzylinderanordnung nach Anspruch 1, **dadurch gekennzeichnet, dass** der Zylinderraum (5) für das Hydraulikfluid und der durch den Speicherkolben (19) begrenzte gasseitige Raum des Kolbenspeichers (7) durch ein von Ende zu Ende absatzlos durchgehendes Zylinderrohr (3) gebildet sind.

3. Kolbenzylinderanordnung nach Anspruch 1 oder 2, **dadurch gekennzeichnet, dass** in dem Zwischenkörper (21) ein Fluiddurchlass in Form einer Durchgangsbohrung (23) vorgesehen ist.

4. Kolbenzylinderanordnung nach einem der vorstehenden Ansprüche, **dadurch gekennzeichnet, dass** ein Zwischenkörper (21) in Form einer im Zylinder (1) passend aufnehmbaren runden Platte vorgesehen ist, die mittels zumindest eines Sprengringes axial im Zylinder (1) gesichert ist.

5. Kolbenzylinderanordnung nach einem der vorstehenden Ansprüche, **dadurch gekennzeichnet, dass** in dem mit der Kolbenstange (13) verbundenen Kolben (15) ein Drossel-Rückschlagventil (45) einen begrenzten Fluiddurchstrom von der Kolbenvorderseite zu der an die Kolbenstange (13) angrenzenden Kolbenrückseite ermöglicht.

## Claims

1. Hydropneumatic piston/cylinder arrangement, in particular, for use as a spring element and/or shock absorber element, comprising a cylinder (1) and a piston (15), the piston (15) being axially moveable in the cylinder chamber (5) of said cylinder, the cylinder chamber (5) being filled with hydraulic fluid, piston (15) being connected to a piston rod (13) which extends outwards in a sealed manner from one end of the cylinder (1), and the base of said piston, which is remote from the piston rod (13), can be operatively connected to a pneumatic spring mechanism (7) in order to convey fluid, wherein a piston accumulator (7) is provided as a spring mechanism, the accumulator piston (19) of which directly adjoins the hydraulic fluid situated in the cylinder chamber (5), and wherein in the cylinder chamber (5) an intermediate body (21) is fixedly arranged axially to the piston (15) connected to the piston rod (13) and to the accumulator piston (19) in which intermediate body is provided at least one fluid passage (23, 25) enabling a predetermined throughflow of fluid (23, 25), **characterised in that** the intermediate body (21) has at least one fluid passage in the form of a choke/check valve (25) and **in that** the choke/check valve (25) has a valve plate (27) in which there is a bore (35) to form a choke point.

2. Piston/cylinder arrangement according to claim 1, **characterised in that** the cylinder chamber (5) for the hydraulic fluid and the gas-side chamber of the piston accumulator (7) bounded by the accumulator piston (19) are formed by an end to end seamless cylindrical tube (3).

3. Piston/cylinder arrangement according to claim 1 or 2, **characterised in that** intermediate body (21) has a fluid passage in the form of a through bore (23).

4. Piston/cylinder arrangement according to one of the preceding claims, **characterised in that** an intermediate body (21) in the form of a round plate that fits and can be accommodated in the cylinder (1) and which is secured at least axially in cylinder (1) by means of a circlip.

5. Piston/cylinder according to one of the preceding claims, **characterised in that** in the piston (15) connected to the piston rod (13) there is a choke/check valve (45) which permits a limited fluid flow from the front side of the piston to the rear side of the piston adjoining piston rod (13).

## Revendications

1. Ensemble piston-cylindre hydropneumatique à utiliser notamment comme élément à ressort et/ou amortisseur de choc, comprenant un cylindre (1) et un piston (15), guidé avec possibilité de déplacement axial dans son espace (5) de cylindre empli de fluide hydraulique et relié à une tige (13) de piston guidée vers l'extérieur avec une étanchéité à une extrémité du cylindre (1), piston dont le fond, loin de la tige (13) du piston, peut être mis en liaison de coopération fluidique avec un ressort (7) accumulateur pneumatique, dans lequel il est prévu, comme ressort accumulateur, un accumulateur (7) à piston, dont le piston (19) est voisin directement du fluide hydraulique se trouvant dans l'espace (5) du cylindre, dans lequel il est disposé, dans l'espace (5) du cylindre, entre le piston (15) relié à la tige (13) de piston et le piston (19) accumulateur, de manière fixe axialement, un corps (21) intermédiaire, dans lequel est prévu au moins un passage (23, 25) pour du fluide autorisant un débit donné à l'avance,
**caractérisé en ce qu'**il est prévu dans le corps (21) intermédiaire un passage pour du fluide sous la forme d'un clapet antiretour (25) à étranglement et **en ce que** le clapet antiretour (25) à étranglement est pourvu d'un plateau (27) de clapet, dans lequel il y a un trou (35) de formation d'un point d'étranglement.

2. Ensemble piston-cylindre suivant la revendication 1, **caractérisé en ce que** l'espace (5) de cylindre pour le fluide hydraulique et l'espace du côté du gaz, délimité par le piston (19) accumulateur, du piston (7) accumulateur sont formés par un tube (3) cylindrique continu sans ressaut d'une extrémité à l'autre.

3. Ensemble piston-cylindre suivant la revendication 1 ou 2, **caractérisé en ce qu'**un passage pour du fluide, sous la forme d'un trou (23) traversant, est prévu dans le corps (21) intermédiaire.

4. Ensemble piston-cylindre suivant l'une des revendications précédentes, **caractérisé en ce qu'**un corps (21) intermédiaire est prévu, sous la forme d'une plaque circulaire pouvant être reçue de manière adaptée dans le cylindre (1) et bloquée axialement dans le cylindre (1) au moyen d'un jonc élastique.

5. Ensemble piston-cylindre suivant l'une des revendications précédentes, **caractérisé en ce que**, dans le piston (15) relié à la tige (13) de piston, un clapet antiretour (45) à étranglement rend possible un débit de fluide limité du côté avant du piston au côté arrière du piston voisin de la tige (13) du piston.
